# EUROPÄISCHE PATENTANMELDUNG

(11) **EP 1 398 192 A2**
(43) Veröffentlichungstag der Anmeldung: **17.03.2004**
(21) Anmeldenummer: 03020187.5
(22) Anmeldetag: 05.09.2003
(51) Int. Cl.: B60J 7/00

(54) **Sonnenrollo für ein Fahrzeugdach**

(30) Priorität: 16.09.2002 DE 10243068
(71) Anmelder: Webasto Vehicle Systems International GmbH, 82131 Stockdorf (DE)
(72) Erfinder: Färber, Manfred, 82407 Wielenbach (DE)
(74) Vertreter: Bedenbecker, Markus

(57) **Zusammenfassung**

Die Erfindung betrifft eine Sonnenrolloanordnung für ein Fahrzeugdach oder dergleichen, mit einer Wickelwelle (18) und einem auf diese aufwickelbaren bzw. von dieser abwickelbaren Rollotuch (22), wobei das Rollotuch (22) einen oder mehrere quer zur Wickelrichtung sich erstreckende Stützspriegel (32, 34) aufweist, die über an deren beiden Enden angeordnete Spriegelgleiter (36, 38) in seitlichen Führungsschienen (14) geführt sind. Die Wickelwelle (18) ist an ihren beiden Enden in Lagerböcken (46) drehgelagert, die ihrerseits in zu den Führungsschienen der Spriegelgleiter im wesentlichen fluchtenden Führungsschienen verschiebbar sind. Um beim Aufwickeln des Rollotuches (22) auch die Stützspriegel (32, 34) auf die Wickelwelle (18) aufwickeln zu können, müssen die Spriegelgleiter aus einer der Innenweite (W2) zwischen den Führungsschienen (14) entsprechenden ersten Stellung in eine der Innenweite (W1) zwischen den Lagerböcken (46) entsprechenden zweiten Stellung bewegt werden. Das erfolgt durch eine den Lagerböcken zugeordnete Leitvorrichtung (56).

## Beschreibung

Die vorliegende Erfindung betrifft eine Sonnenrolloanordnung gemäß dem Oberbegriff des Anspruches 1.

Bei großen Spannweiten der Rolloanordnung quer zur Wickelrichtung ist es erforderlich, das Rollotuch mittels quer zur Wickelrichtung sich erstreckenden Stützspriegeln zu stützen, damit es nicht durchhängt. Die Stützspriegel sind auch erforderlich, wenn das Dach in Längsrichtung gewölbt ist und das Rollotuch der Wölbung folgen soll. Derartige Rolloanordnungen werden in weitem Umfang eingesetzt und sie bieten im allgemeinen dann keinerlei konstruktive Schwierigkeiten, wenn die Wickelwelle ortsfest am Fahrzeugdach angeordnet ist und die Lagerböcke für die Wickelwelle seitlich so weit außen angeordnet werden können, dass sie den mit den Stützspriegeln auf die Wickelwelle aufgewickelten Spriegelgleitern nicht im Wege sind. Es genügt dann eine sehr einfache, nur in einer Ebene senkrecht zur Rolloebene wirkende Einfädelhilfe, um beim Abwickeln des Rollotuches die Spriegelgleiter in die zugeordneten Führungsschienen zu leiten.

Bei großen Dachsystemen mit großen Glasflächen bzw. bei sogenannten Semicabriolets ist in jüngerer Zeit versucht worden, Sonnenrolloanordnungen zu entwickeln, bei welchen die Wickelwelle bzw. die aus Wickelwelle und Rollotuch bestehende Rolloeinheit als Ganzes, vorzugsweise in aufgewickeltem Zustand, längs seitlichen Führungsschienen zwischen einer Betriebsstellung und beispielsweise einer Außerbetriebsstellung verschiebbar ist. Daneben besteht selbstverständlich immer die Forderung, den in Fahrzeugdächern geringen zur Verfügung stehenden Einbauraum möglichst sparsam zu nutzen und insbesondere auch die Durchsichtbreite des Glasdaches nicht unnötig zu beschränken.

Aufgabe der vorliegenden Erfindung ist es, eine Sonnenrolloanordnung der im Oberbegriff des Anspruches 1 genannten Art zu schaffen, die es bei konstruktiv einfachen Mitteln und bei möglichst sparsamen Verbrauch des zu Verfügung stehenden Einbauraumes erlaubt, die Wickelwelle bzw. die aus Wickelwelle und Rollotuch bestehende Sonnenrolloeinheit in Wickelrichtung zu verschieben.

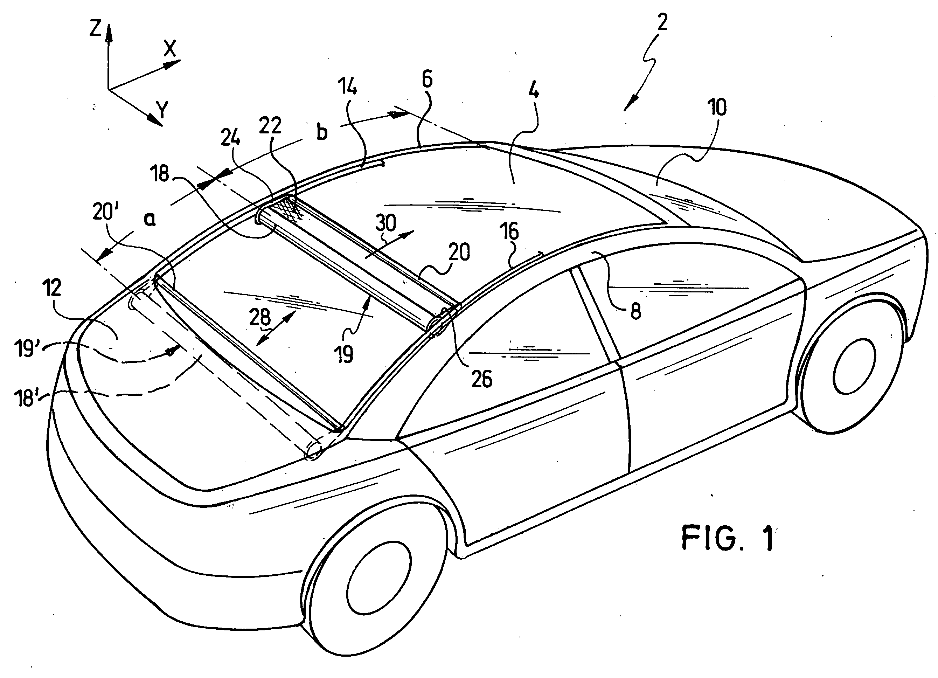

Diese Aufgabe ist erfindungsgemäß durch die im Anspruch 1 angegebene Sonnenrolloanordnung gelöst. Es sei hier auf folgende Definitionen hingewiesen: "nach vorne" ist die Abwickelrichtung des Rollotuches, "nach hinten" dementsprechend die Gegenrichtung; "nach innen" bedeutet die Richtung z.B. von einem Ende der Wickelwelle zu deren Mitte hin, "nach außen" bezeichnet die Gegenrichtung; mit den X-, Y- und Z-Richtungen sind die im Kfz-Bau üblichen, in den Fig. 1, 3 und 4 angegebenen Koordinatenrichtungen bezeichnet.

Um die Wickelwelle verschieben zu können, ist diese an ihren beiden Enden in Lagerböcken drehgelagert, die ihrerseits in Führungsschienen verschiebbar sind. Der Forderung nach einer optimalen Ausnutzung des zur Verfügung stehenden Einbauraumes wird dadurch entsprochen, dass die Lagerböcke in zu den Führungsschienen der Spriegelgleiter im wesentlichen fluchtenden Führungsschienen bzw., wie später anhand einer speziellen Ausgestaltung ausgeführt wird, in den gleichen Führungskanälen einer integralen Führungsschiene geführt sind.

Dabei entsteht jedoch das Problem, dass die Innenweite zwischen den beiden Lagerböcken der Wickelwelle kleiner ist als die nutzbare Innenweite zwischen den beiden einander gegenüberliegenden Führungsschienen. Um die Stützspriegel im aufgewickelten Zustand des Rollotuches zwischen den beiden Lagerböcken unterbringen zu können, ist deshalb erfindungsgemäß vorgesehen, dass die Spriegelgleiter an den zugeordneten Stützspriegeln quer zur Wickelrichtung zwischen einer der Innenweite zwischen den beiden seitlichen Führungsschienen angepassten ersten Stellung und einer der Innenweite zwischen den Lagerböcken angepassten zweiten Stellung verstellbar angeordnet sind, und dass den Lagerböcken Leitvorrichtungen zugeordnet sind, die die Spriegelgleiter beim Aufwickeln des Rollotuches aus der ersten Stellung in die zweite Stellung und beim Abwickeln aus der zweiten Stellung in die erste Stellung leiten.

Auf diese Weise ist es möglich, die Führungsschienen für die Spriegelgleiter so weit wie möglich seitlich nach außen anzuordnen, um eine möglichst große Durchsichtbreite sicherzustellen, gleichzeitig aber die Stützspriegel beim Aufwickeln innerhalb der geringeren Innenweite zwischen den für eine Verschiebemöglichkeit der Wickelwelle erforderlichen Lagerböcken unterzubringen.

Die Verstellbarkeit der Spriegelgleiter zwischen ihrer ersten und zweiten Stellung wird gemäß einer Ausgestaltung der Erfindung dadurch ermöglicht, dass die Enden eines jeden Stützspriegels jeweils teleskopartig mit einem gegenüber dem Spriegelkörper ein- bzw. ausfahrbaren Endstück ausgebildet sind, welches den zugeordneten Spriegelgleiter trägt. Eine derartige teleskopartige Ausbildung lässt sich konstruktiv in einfacher Weise durch Ineinanderstecken komplementärer Profile gestalten.

Die Leitvorrichtungen umfassen gemäß einer weiteren Ausgestaltung der Erfindung jeweils den Führungsschienen für die Spriegelgleiter ähnliche, an diese anschließende Schienenabschnitte, welche in der Rolloebene auf die Innenweite zwischen den Lagerböcken hin abgekröpft sind. Diese Schienenabschnitte übernehmen die Spriegelgleiter aus den Führungsschienen bzw. übergeben die Spriegelgleiter an die Führungsschienen im wesentlichen stoßfrei und überführen diese bei der Aufwickelbewegung bzw. der Abwickelbewegung des Rollotuches aus der ersten Stellung in die zweite Stellung bzw. aus der zweiten Stellung in die erste Stellung.

Um eine sichere Zwangsführung der Spriegelgleiter bei ihrer Verschiebung längs den Führungsschienen und längs den Leitvorrichtungen zu gewährleisten, ist in einer weiteren Ausgestaltung der Erfindung vorgesehen, dass die Führungsschienen für die Spriegelgleiter einerseits und die Schienenabschnitte der Leitvorrichtungen andererseits jeweils zwei im wesentlichen senkrecht zur Rolloebene stehende, einander gegenüberliegende Leitstege umfassen, die formschlüssig in entsprechende, an der Oberseite und der Unterseite der Spriegelgleiter ausgebildete Leitnuten eingreifen, wie anhand eines Ausführungsbeispieles noch genauer dargelegt wird.

Eine insbesondere montagetechnisch einfache Konstruktion ergibt sich dann, wenn gemäß einer weiteren Ausgestaltung die Leitvorrichtungen jeweils integral mit dem zugeordneten Lagerbock ausgebildet sind.

Gemäß einer weiteren Ausgestaltung der Erfindung sind die Führungsschienen für die Spriegelgleiter und die Führungsschienen für die Lagerböcke der Wickelwelle jeweils als eine integrale Führungsschiene ausgebildet, wobei gemäß einer weiteren Ausgestaltung der Erfindung die einer Führungsschiene zugeordneten Spriegelgleiter einerseits und die Lagerböcke der Wickelwelle andererseits jeweils in einem und demselben Führungskanal der Führungsschiene geführt werden können, welche gegebenenfalls jeweils an die Form der Spriegelgleiter bzw. der Lagerböcke angepasste Abschnitte aufweist.

In vielen Anwendungsfällen wird es genügen, wenn die Wickelwelle aus einer Betriebsstellung nur über einen hinteren Abschnitt der Führungsschiene nach hinten in eine Außerbetriebsstellung verschiebbar ist. Für einen solchen Fall weisen die integralen Führungsschienen beispielsweise jeweils einen in Abwickelrichtung des Rollotuches vorderen Abschnitt zur Führung der Spriegelgleiter und einen hinteren Abschnitt zur Führung der Lagerböcke auf, wobei diese Abschnitte jeweils beispielsweise durch eine Maschinenbearbeitung oder auch schon bei der Herstellung an die optimale Form der Spriegelgleiter bzw. der Lagerböcke angepasst sind, so dass insoweit eine gewisse konstruktive Freiheit für die jeweilige Ausgestaltung der Spriegelgleiter bzw. der Lagerböcke gegeben ist.

Bei einer Sonnenrolloanordnung mit mehreren Stützspriegeln ist weiter vorgesehen, dass die Stützspriegel bezüglich ihrer Anzahl und ihres gegenseitigen Abstandes so am Rollotuch angeordnet sind, dass sich die Spriegelgleiter im aufgewickelten Zustand des Rollotuches jeweils über den Umfang der Wickelwelle verteilen, d.h. dass keine zwei Spriegelgleiter aufeinander zu liegen kommen, was die radialen Abmessungen im Bereich der aufgewickelten Spriegel in unnötiger Weise vergrößern würde.

Vorzugsweise ist an der Vorderkante des Rollotuches ein Zugspriegel mit an dessen Enden angeordneten Zugspriegelgleitern vorgesehen, wobei diese Zugspriegelgleiter in den Führungsschienen der Spriegelgleiter für die Stützspriegel geführt sind. Die Zugspriegelgleiter können in einer Ausgestaltung der Erfindung ebenfalls quer zur Wickelrichtung verstellbar am Zugspriegelkörper angeordnet sein, so dass das Rollotuch vollständig bis zur Anlage des Zugspriegels an der Wickelwelle aufgewickelt werden kann; in einer anderen vereinfachten Ausgestaltung ist vorgesehen, dass die Zugspriegelgleiter fest am Zugspriegelkörper angeordnet sind, was bedeutet, dass das Rollotuch nur so weit aufgewickelt werden kann, bis der Zugspriegel den Abkröpfungsbereich der Leitvorrichtung erreicht.

Zur Verstellung der Wickelwelle längs den Führungsschienen ist gemäß einer Ausgestaltung der Erfindung vorgesehen, dass an den Lagerböcken der Wickelwelle jeweils mit einer - vorzugsweise elektrischen - Antriebsvorrichtung verbundene Antriebskabel angreifen. In ähnlicher Weise ist vorgesehen, dass zum Abwickeln bzw. Aufwickeln, d.h. Schließen bzw. Öffnen der Rolloanordnung an den Zugspriegelgleitern jeweils mit einer - vorzugsweise elektrischen - Antriebsvorrichtung verbundene Antriebskabel angreifen. Die Antriebskabel sind beispielsweise in an sich bekannten, an den Führungsschienen ausgebildeten Kabelkanälen bis zu den ortsfest am Fahrzeugdach angeordneten Antriebsvorrichtungen geführt. Selbstverständlich können statt elektrischer Antriebsvorrichtungen auch manuell über eine Kurbel bediente Antriebsvorrichtungen oder dergleichen vorgesehen sein.

Ein Ausführungsbeispiel der Erfindung ist in der Zeichnung dargestellt und im folgenden näher beschrieben. Es zeigt:
- Fig. 1: schematisch eine perspektivische Ansicht eines Kraftfahrzeuges mit einer verschiebbaren Rolloeinheit;
- Fig. 2: schematisch in einer Seitenansicht eine verschiebbare Rolloeinheit in zwei Stellungen;
- Fig. 3: schematisch in einer perspektivischen Darstellung ein seitliches Ende einer verschiebbaren Rolloeinheit mit Führungsschiene und Leitvorrichtung;
- Fig. 4: eine Ansicht ähnlich der Fig. 3, jedoch bei einem anderen Abwickelzustand des Rollotuches; und
- Fig. 5a bis 5c: jeweils Schnitte entsprechend den Schnittlinie A-A, B-B und C-C in Fig. 4.

Das in Fig. 1 dargestellte Kraftfahrzeug 2, beispielsweise eine vier- oder fünfsitzige Limousine oder ein Coupe, weist ein Fahrzeugdach 4 mit seitlichen Dachlängsholmen 6, 8 auf, die sich vorne an die A-Säulen anschließen und hinten in die C-Säulen übergehen. Zwischen den Dachlängsholmen 6, 8 erstreckt sich anschließend an die Windschutzscheibe 10 das Fahrzeugdach 4 in Form eines festen Glasdaches etwa bis zu einem Kofferraumdeckel 12. Das Fahrzeugdach 4 kann einteilig oder mehrteilig gebildet sein, und der hintere Abschnitt kann auch eine Heckscheibe sein, die sich unmittelbar und übergangslos an den davor liegenden Abschnitt des Fahrzeugdaches 4 anschließen kann. An der Innenseite eines jeden Dachlängsholmes 6, 8 ist jeweils eine Führungsschiene 14, 16, beispielsweise ein Aluminiumprofil, angebracht, in der die Wickelwelle 18 einer Rolloeinheit sowie in an sich bekannter Weise der Zugspriegel 20 sowie in der Fig. nicht dargestellte Stützspriegel eines auf die Wickelwelle 18 aufwickelbaren bzw. von dieser abwickelbaren Rollotuches 22 verschiebbar geführt sind.

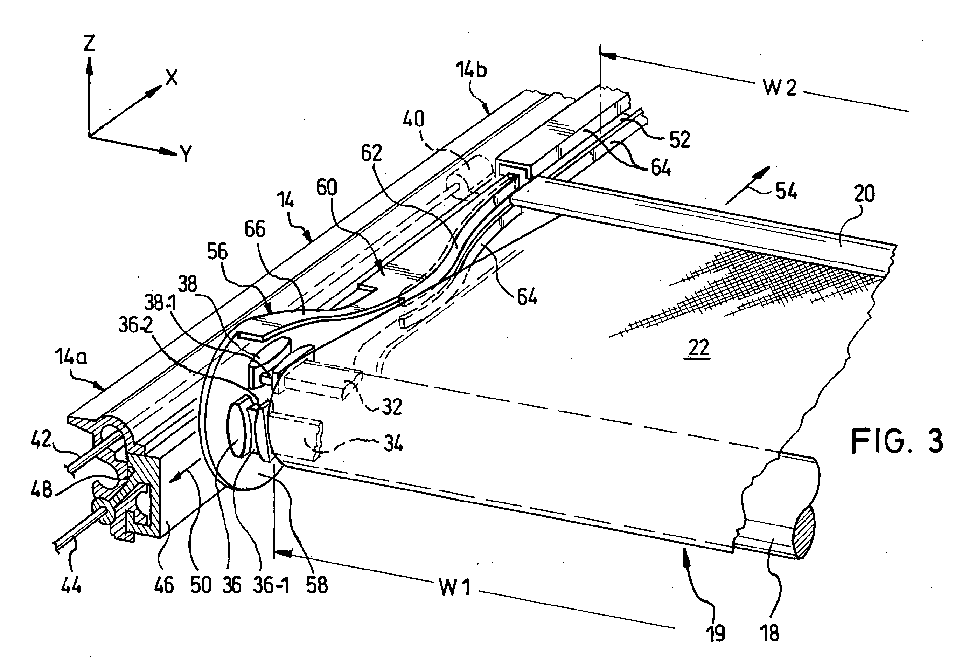

Die Wickelwelle 18 ist mit ihren beiden Enden in Lagerböcken 24, 26 gelagert, die verschiebbar in den zugeordneten Führungsschienen 14, 16 geführt sind. Der Zugspriegel 20 sowie die in Fig. 1 nicht dargestellten Stützspriegel haben an ihren jeweiligen Enden Spriegelgleiter, die ebenfalls in den zugeordneten Führungsschienen 14, 16 geführt sind, wie insbesondere in den Fig. 3 bis 5 genauer dargestellt ist.

Die Lagerböcke 24, 26 sind beispielsweise über mit einer manuellen oder elektrischen Antriebsvorrichtung verbundene Antriebskabel in den zugeordneten Führungsschienen 14, 16 verschiebbar, so dass die Rolloeinheit 19 in Richtung des Doppelpfeiles 28 beispielsweise aus der in Fig. 1 mit durchgehenden Linien gezeichneten Betriebsstellung um die Strecke a in die gestrichelt dargestellte Auβerbetriebsstellung und zurück verstellbar ist. In Fig. 1 nicht dargestellte an den beiden Enden des Zugspriegels 20 angeordnete Zugspriegelgleiter sind ebenfalls beispielsweise über Antriebskabel mit einer von der Antriebsvorrichtung für die Wickelwelle 18 unabhängigen manuellen oder elektrischen Antriebsvorrichtung verbunden, mittels der das Rollotuch 22 in Richtung des Pfeiles 30 von der Wickelwelle 18 abwickelbar oder in der Gegenrichtung auf diese aufwickelbar ist.

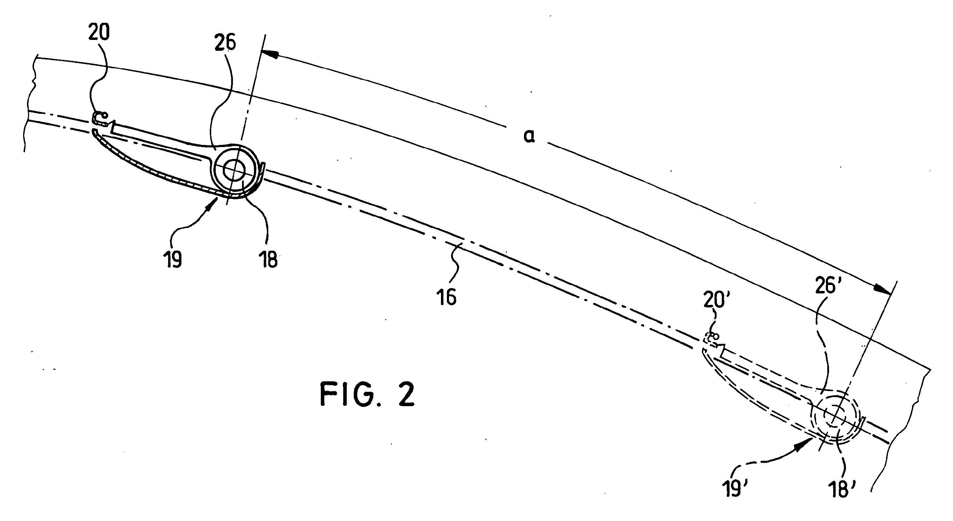

Fig. 2 zeigt schematisch in einer Seitenansicht mit durchgehenden Linien die Rolloeinheit 19 mit einer Wickelwelle 18, einem Lagerbock 26 und einem Zugspriegel 20, welcher durch Aufwickeln des nicht dargestellten Rollotuches bis an den Lagerbock 26 gezogen ist. In der Fig. 2 auf der linken Seite ist die Rolloeinheit 19 in einer vorderen Arbeitsstellung dargestellt; auf der rechten Seite der Fig. 2 ist die Rolloanordnung 19' mit der Wickelwelle 18', dem Lagerbock 26' und dem Zugspriegel 20' in einer um die Strecke a nach hinten in eine Außerbetriebsstellung verfahrenen Position dargestellt. Der Lagerbock 26 und der Zugspriegel 20 sind jeweils längs einer zugeordneten Führungsschiene 16 verfahrbar, wie anhand der Fig. 1 bereits erläutert wurde.

Fig. 3 zeigt in einer schematischen perspektivischen Teilansicht den linken Endbereich der Rolloanordnung 19 mit der Wickelwelle 18, dem auf diese aufgewickelten Rollotuch 22, dem an der Vorderkante des Rollotuches 22 befestigten Zugspriegel 20 sowie zwei auf die Wickelwelle 18 aufgewickelten Stützspriegeln 32 und 34. Der rechte Endbereich der Rolloanordnung 19 ist bezüglich einer vertikalen Längsmittelebene der Rolloanordnung, die mit einer Längsmittelebene des Kraftfahrzeuges zusammenfällt, symmetrisch ausgebildet und braucht deshalb nicht eigens beschrieben zu werden. An den Enden der Stützspriegel 32 bzw. 34 sind jeweils Spriegelgleiter angeordnet, von denen in Fig. 3 nur die beiden linksseitigen Spriegelgleiter 36 bzw. 38 dargestellt sind. An den Enden des Zugspriegels 20 sind Zugspriegelgleiter angeordnet, von denen in Fig. 3 nur der linksseitige Zugspriegelgleiter 40 dargestellt ist. Es sei an dieser Stelle auch bemerkt, dass die im Beispiel dargestellte Rolloanordnung für den Fall dargestellt ist, in welchem die Wickelwelle 18 aus der in Fig. 1 dargestellten Betriebsstellung nur um den Betrag a nach hinten verschoben werden kann, und in welchem das Rollotuch 22 nur in der Betriebsstellung um den Betrag b nach vorne abgewickelt werden kann. Für diesen Anwendungsfall kann der hintere, dem Bereich a entsprechende Abschnitt 14a der Führungsschiene 14 speziell an die konstruktive Ausgestaltung des Lagerbockes und der vordere Abschnitt 14b an die Ausgestaltung der Spriegelgleiter angepasst sein. Falls die Rolloanordnung über die gesamte Länge des Fahrzeugdaches verschiebbar sein soll, dann müssen entweder jeweils getrennte, über die gesamte Länge des Fahrzeugdaches verlaufende Führungskanäle für die Lagerböcke einerseits und die Spriegelgleiter andererseits vorgesehen sein, oder die Lagerböcke und die Spriegelgleiter müssen beide an die Querschnittsform eines gemeinsamen Führungskanals angepasst sein, wie hier nicht eigens dargestellt ist.

Fig. 3 zeigt weiter eine Führungsschiene 14, die beispielsweise durch ein Aluminium-Ziehprofil mit mehreren Führungskanälen für die Spriegelgleiter 36, 38, 40, für Lagerböcke 46, für die Wickelwelle 18, für Antriebskabel 42 bzw. 44 zum Verstellen des Zugspriegels 20 bzw. der Wickelwelle 18 usw. gebildet ist. Wie die Fig. 3 erkennen lässt, ist die Wickelwelle 18 an einem Lagerbock 46 drehbar gelagert, der seinerseits in einem Führungskanal 48 der Führungsschiene 14 verschiebbar angeordnet und mittels des Antriebskabels 44 verstellbar ist. Auf diese Weise kann die Wickelwelle 18 aus der in Fig. 3 dargestellten Betriebsstellung in Richtung des Pfeiles 50 beispielsweise bis in eine Außerbetriebsstellung verstellt werden, wie anhand der Fig. 1 und 2 bereits dargelegt wurde.

Der Zugspriegelgleiter 40 ist in einem Führungskanal 52 der Führungsschiene 14 verschiebbar und mittels des Antriebskabels 42 verstellbar. Auf diese Weise kann der Zugspriegel 20 aus der in Fig. 3 dargestellten Stellung, die einem aufgewickelten Zustand des Rollotuches 22 entspricht, in Richtung des Pfeiles 54 verschoben werden, wobei das Rollotuch 22 abgewickelt wird. Dabei werden auch die auf die Wickelwelle 18 aufgewickelten Stützspriegel 32, 34 abgewickelt, wobei deren Spriegelgleiter 36, 38 in den Führungskanal gelenkt und in diesem geführt werden. Wie bereits erläutert wurde, ist der Führungskanal 52 für die Spriegelgleiter 36, 38 mit dem Führungskanal 48 für den Lagerbock 46 im wesentlichen fluchtend ausgebildet. Da der Lagerbock 46 konstruktionsbedingt nach innen, d.h. in Y-Richtung zu der Längsmittelebene hin eine gewisse Bauhöhe aufweist, d.h. die Innenweite W1 zwischen den einander gegenüberliegenden Lagerböcken kleiner ist als die für die Unterbringung der Spriegelgleiter 36, 38 zur Verfügung stehende Innenweite W2 zwischen den einander gegenüberliegenden Führungsschienen, müssen die Spriegelgleiter 36, 38 beim Aufwickeln des Rollotuches 22 eine dieser verminderten Innenweite entsprechende Bewegung nach innen, d.h. in Y-Richtung ausführen. Zu diesem Zweck ist dem Lagerbock 46 eine Leitvorrichtung 56 zugeordnet, die die Spriegelgleiter 36, 38 beim Aufwickeln bzw. Abwickeln des Rollotuches 22 in Y-Richtung bewegt. Diese Leitvorrichtung 56 besteht im wesentlichen aus einer im Bereich der Enden der Wickelwelle 18 angeordneten Anlageplatte 58 und einer sich an diese in Abwickelrichtung 54 anschließenden Leitstrecke 60, an der in Y-Richtung abgekröpfte Leitstege 62 ausgebildet sind, entlang derer sich die Spriegelgleiter 36, 38 beim Aufwickeln des Rollotuches nach innen, d.h. in Fig. 3 nach rechts, und beim Abwickeln des Rollotuches 22 nach außen, d.h. in Fig. 3 nach links bewegen. Den Leitstegen 62 entsprechen am Führungskanal 52 ausgebildete Leitstege 64, durch die die Spriegelgleiter 36, 38 längs dem Führungskanal 52 geführt werden. Wie Fig. 3 weiter erkennen lässt, ist an der Leitvorrichtung 56 außerdem eine Leitfläche 66 ausgebildet, durch die die Spriegelgleiter 36, 38 beim Abwickeln des Rollotuches 22 in der X-Z-Ebene geführt und in den Führungskanal 52 geleitet werden. Wie die Fig. 3, 4 und 5a, 5b erkennen lassen, weisen die Spriegelgleiter 36, 38 jeweils an ihren Ober- bzw. Unterseiten ausgebildete Leitnuten 36-1, 36-2 bzw. 38-1, 38-2 auf, in die die Leitstege 62 bzw. 64 formschlüssig eingreifen.

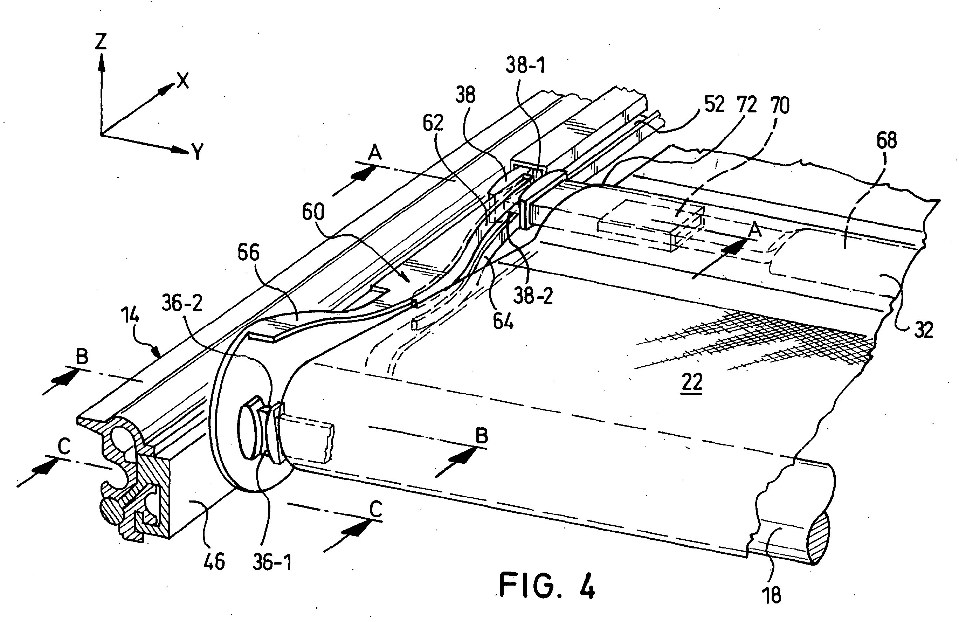

Fig. 4 zeigt eine Ansicht ähnlich der Fig. 3, wobei jedoch das Rollotuch 22 über eine bestimmte Auszugslänge abgewickelt ist, so dass sich der dem Stützspriegel 32 zugeordnete Spriegelgleiter 38 kurz vor der Einführung in den Führungskanal 52 befindet. Der Spriegelgleiter 38 hat sich dabei aus der in Fig. 3 dargestellten Stellung längs der Leitstrecke 60 bis in die in Fig. 4 dargestellte Stellung bewegt, wobei er zunächst durch die Leitfläche 66 in der X-Z-Ebene auf die Höhe des Führungskanals 52 und sodann durch die Leitstege 62 nach außen, d.h. in Fig. 4 nach links bewegt worden ist, so dass er von dem Führungskanal 52 übernommen werden kann.

Die beschriebene Auswärts-Einwärts-Bewegung des Spriegelgleiters 38 wird dadurch ermöglicht, dass der Stützspriegel 32 in seinem Endbereich teleskopartig mit einem gegenüber dem Spriegelkörper 68 ein- bzw. ausfahrbaren Endstück 70 ausgebildet ist, welches den Spriegelgleiter 38 trägt. Wie weiter in der Fig. 4 zu erkennen ist, ist der Stützspriegel 68 in an sich bekannter Weise in einer am Rollotuch 22 ausgebildeten Spriegelschlaufe 72 untergebracht.

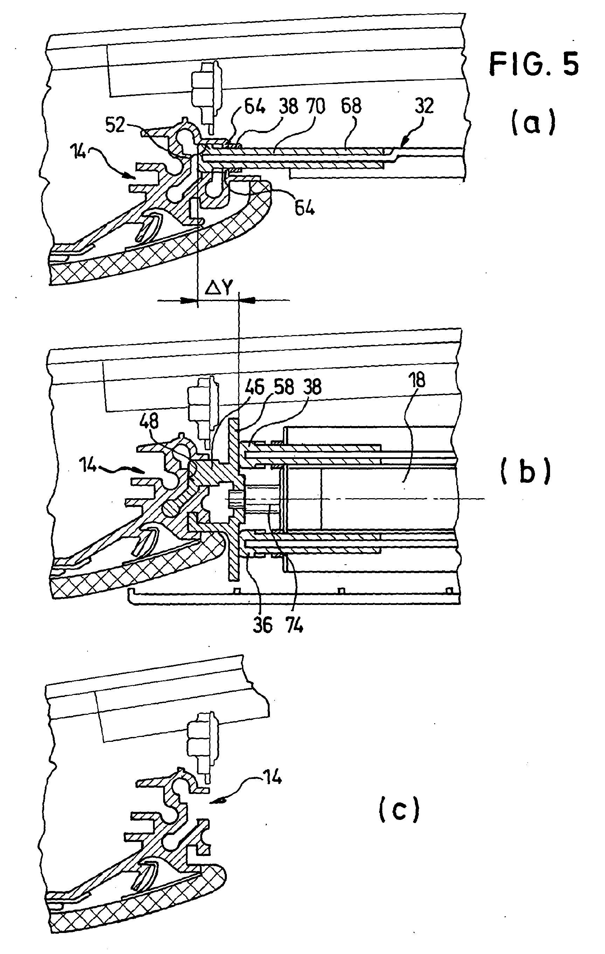

Die Fig. 5a bis 5c zeigen jeweils Querschnitte entsprechend den Schnittlinien A-A bis C-C in Fig. 4 und verdeutlichen nochmals die zuvor beschriebenen Zusammenhänge im einzelnen.

Fig. 5a zeigt die Führungsschiene 14 mit unterschiedlichen Führungskanälen zur Führung der Spriegelgleiter, der Antriebskabel usw.. Der dem Stützspriegel 32 zugeordnete Spriegelgleiter 38 befindet sich entsprechend der Fig. 4 in der für eine Übergabe an den Führungskanal 52 geeigneten Stellung, d.h. in der Stellung, in der er aus der Leitvorrichtung 60 in den Führungskanal 52 übergeben werden kann. Dabei wird der Spriegelgleiter von den Leitstegen 62 der Führungsvorrichtung 60 freigegeben und von den Leitstegen 64 des Führungskanals 52 übernommen. Das Endstück 70 befindet sich in einer gegenüber dem Spriegelkörper 68 des Stützspriegels 32 ausgefahrenen Stellung.

Fig. 5b zeigt die Führungsschiene 14 im Bereich der Wickelwelle 18. Die Wickelwelle 18 ist über an ihren Enden ausgebildete Wellenstutzen 74 drehbar in dem längs der Führungsschiene 14 verschiebbaren Lagerbock 46 gelagert. Der Lagerbock 46 ist in dem an der Führungsschiene 14 ausgebildeten Führungskanal 48 aufgenommen. An dem Lagerbock 46 ist die Anlageplatte 58 ausgebildet, an die sich die Spriegelgleiter 36, 38 in ihrem aufgewickelten Zustand anlegen. Wie ein Vergleich der Fig. 5a und 5b zeigt, ist die Innenweite zwischen zwei einander gegenüberliegenden Lagerböcken an jedem Wickelwellenende um den Betrag ΔY kleiner als die nutzbare Innenweite zwischen den Führungskanälen 52 zweier einander gegenüberliegender Führungsschienen. Um diesen Betrag ΔY müssen die Spriegelgleiter mittels der Leitvorrichtung 56 verschoben werden. Wie ein Vergleich der Fig. 5a und 5b erkennen lässt, sind der Führungskanal 52 im vorderen, zur Führung der Spriegelgleiter bestimmten Abschnitt der Führungsschiene 14 einerseits und der Führungskanal 48 im hinteren, zur Führung des Lagerbockes 46 bestimmten Abschnitt im wesentlichen miteinander fluchtend ausgebildet. Wie weiter vorne bereits ausgeführt wurde, sind der vordere Abschnitt 14b und der hintere Abschnitt 14a der Führungsschiene 14 jeweils integral aus einem einzigen Ziehprofil gebildet, wobei jedoch im hinteren Bereich dort nicht benötigte Elemente, insbesondere zur Führung der Spriegelgleiter bestimmte Profilabschnitte durch eine Maschinenbearbeitung oder auch schon beim Herstellungsvorgang fortgelassen sind. Fig. 5c zeigt den nach der Maschinenbearbeitung verbleibenden Teil der Führungsschiene 14 nochmals im einzelnen in einem Schnitt entlang der Schnittlinie C-C der Fig. 4. Sie lässt erkennen, dass insbesondere die zur Führung der Spriegelelemente bestimmten Leitstege 64 nicht vorhanden sind.

### Bezugszeichenliste

- 2: Kraftfahrzeug
- 4: Fahrzeugdach
- 6: Dachlängsholm
- 8: Dachlängsholm
- 10: Windschutzscheibe
- 12: Kofferraumdeckel
- 14: Führungsschiene
- 14a: hinterer Abschnitt von 14
- 14b: vorderer Abschnitt von 14
- 16: Führungsschiene
- 18, 18': Wickelwelle
- 19, 19': Rolloeinheit
- 20, 20': Zugspriegel
- 22: Rollotuch
- 24: Lagerbock
- 26: Lagerbock
- 28: Doppelpfeil
- 30: Pfeil
- 32: Stützspriegel
- 34: Stützspriegel
- 36: Spriegelgleiter
- 36-1, 36-2: Leitnuten
- 38: Spriegelgleiter
- 38-1, 38-2: Leitnuten
- 40: Zugspriegelgleiter
- 42: Antriebskabel
- 44: Antriebskabel
- 46: Lagerbock
- 48: Führungskanal
- 50: Pfeil
- 52: Führungskanal
- 54: Pfeil
- 56: Leitvorrichtung
- 58: Anlageplatte
- 60: Leitstrecke
- 62: Leitstege
- 64: Leitstege
- 66: Leitfläche
- 68: Spriegelkörper
- 70: Endstück
- 72: Spriegelschlaufe
- 74: Wellenstutzen
- W1: Innenweite
- W2: Innenweite

## Patentansprüche

1. Sonnenrolloanordnung für ein Fahrzeugdach oder dergleichen, mit einer Wickelwelle und einem auf diese aufwickelbaren bzw. von diesem abwickelbaren Rollotuch, wobei das Rollotuch einen oder mehrere quer zur Wickelrichtung sich erstreckende Stützspriegel aufweist, die über an deren beiden Enden angeordnete Spriegelgleiter in seitlichen Führungsschienen geführt sind,
**dadurch gekennzeichnet,**
**dass** die Wickelwelle (18) an ihren beiden Enden in Lagerböcken (46) drehgelagert ist, die ihrerseits in zu den Führungsschienen (14) für die Spriegelgleiter (36, 38) im wesentlichen fluchtenden Führungsschienen (14) verschiebbar sind,
**dass** die Spriegelgleiter (36, 38) an den zugeordneten Stützspriegeln (32, 34) quer zur Wickelrichtung (z.B. Abwickelrichtung 54) zwischen einer der Innenweite (W2) zwischen den beiden seitlichen Führungsschienen (14) angepassten ersten Stellung und einer der Innenweite (W1) zwischen den Lagerböcken (46) angepassten zweiten Stellung verstellbar angeordnet sind, und
**dass** den Lagerböcken (46) Leitvorrichtungen (56) zugeordnet sind, die die Spriegelgleiter (36, 38) beim Aufwickeln des Rollotuches (22) aus der ersten Stellung in die zweite Stellung und beim Abwickeln aus der zweiten Stellung in die erste Stellung leiten.

2. Sonnenrolloanordnung nach Anspruch 1,
**dadurch gekennzeichnet, dass** die Enden eines jeden Stützspriegels (32, 34) jeweils teleskopartig mit einem gegenüber dem Spriegelkörper (68) ein- bzw. ausfahrbaren Endstück (70) ausgebildet sind, welches den zugeordneten Spriegelgleiter (38) trägt.

3. Sonnenrolloanordnung nach Anspruch 1 oder 2,
**dadurch gekennzeichnet, dass** die Leitvorrichtungen (56) jeweils den Führungsschienen (14) für die Spriegelgleiter ähnliche, an diese anschließende Schienenabschnitte (60) umfassen, welche in der Rolloebene auf die Innenweite (W1 ) zwischen den Lagerböcken (46) hin nach innen abgekröpft sind.

4. Sonnenrolloanordnung nach Anspruch 3,
**dadurch gekennzeichnet, dass** die Führungsschienen (14) für die Spriegelgleiter (46, 48) einerseits und die Leitvorrichtungen (56) andererseits jeweils zwei im wesentlichen senkrecht zur Rolloebene stehende, einander gegenüberliegende Leitstege (62; 64) umfassen, die formschlüssig in entsprechende, an der Oberseite und der Unterseite der Spriegelgleiter (36, 38) ausgebildete Leitnuten (36-1, 36-2; 38-1, 38-2) eingreifen.

5. Sonnenrolloanordnung nach einem der Ansprüche 1 bis 4,
**dadurch gekennzeichnet, dass** die Leitvorrichtungen (56) jeweils integral mit dem zugeordneten Lagerbock (46) ausgebildet sind.

6. Sonnenrolloanordnung nach einem der Ansprüche 1 bis 5,
**dadurch gekennzeichnet, dass** die Führungsschienen für die Spriegelgleiter (36, 38) und die Führungsschienen für die Lagerböcke (46) der Wickelwelle jeweils als eine integrale Führungsschiene (14) ausgebildet sind.

7. Sonnenrolloanordnung nach Anspruch 6,
**dadurch gekennzeichnet, dass** die Spriegelgleiter (36, 38) einerseits und die Lagerböcke (46) der Wickelwelle (18) andererseits jeweils in einem und demselben Führungskanal der Führungsschiene (14) geführt sind.

8. Sonnenrolloanordnung nach Anspruch 6 oder 7,
**dadurch gekennzeichnet, dass** die integralen Führungsschienen (14) jeweils einen in Abwickelrichtung (54) des Rollotuches (22) vorderen Abschnitt (14b) zur Führung der Spriegelgleiter (36, 38) und einen hinteren Abschnitt (14a) zur Führung der Lagerböcke (46) aufweisen, wobei diese Abschnitte jeweils durch Maschinenbearbeitung oder dergleichen an die Form der Spriegelgleiter (36, 38) einerseits bzw. an die Form der Lagerböcke (46) andererseits angepasst sind.

9. Sonnenrolloanordnung nach einem der Ansprüche 1 bis 8,
**dadurch gekennzeichnet, dass** bei Verwendung mehrerer Stützspriegel die Stützspriegel (32, 34) bezüglich ihrer Anzahl und ihres gegenseitigen Abstandes so angeordnet sind, dass sich die Spriegelgleiter (36, 38) im aufgewickelten Zustand des Rollotuches (22) über den Umfang der Wickelwelle (18) verteilen.

10. Sonnenrolloanordnung nach einem der Ansprüche 1 bis 9,
**dadurch gekennzeichnet, dass** an der Vorderkante des Rollotuches (22) ein Zugspriegel (20) mit an dessen Enden angeordneten Zugspriegelgleitern (40) vorgesehen ist, die in den Führungsschienen (14) für die Spriegelgleiter (36, 38) des Stützspriegels (32, 34) geführt sind.

11. Sonnenrolloanordnung nach Anspruch 10,
**dadurch gekennzeichnet, dass** die Zugspriegelgleiter quer zur Wickelrichtung (Abwickelrichtung 54) verstellbar am Zugspriegelkörper angeordnet sind.

12. Sonnenrolloanordnung nach Anspruch 10,
**dadurch gekennzeichnet, dass** die Zugspriegelgleiter fest am Körper des Zugspriegels (20) angeordnet sind.

13. Sonnenrolloanordnung nach einem der Ansprüche 1 bis 12,
**dadurch gekennzeichnet, dass** an den Lagerböcken (46) der Wickelwelle (18) jeweils mit einer Antriebsvorrichtung verbundene Antriebskabel (44) angreifen.

14. Sonnenrolloanordnung nach einem der Ansprüche 10 bis 13,
**dadurch gekennzeichnet, dass** an den Zugspriegelgleitern (40) jeweils mit einer Antriebsvorrichtung verbundene Antriebskabel (42) angreifen.
